# FASCICULE DE BREVET EUROPEEN

(11) **EP 2 872 784 B1**
(45) Date de publication et mention de la délivrance du brevet: **27.12.2017**
(21) Numéro de dépôt: 13735337.1
(22) Date de dépôt: 12.07.2013
(51) Int. Cl.: F15B 13/04, F03B 3/18

(54) **DISPOSITIF DE COMMANDE DU DÉPLACEMENT D'UN VÉRIN HYDRAULIQUE, NOTAMMENT POUR MACHINES HYDRAULIQUES**
VORRICHTUNG ZUR STEUERUNG DER BEWEGUNG EINES HYDRAULIKZYLINDERS, INSBESONDERE FÜR HYDRAULIKMASCHINEN
DEVICE FOR CONTROLLING THE MOVEMENT OF A HYDRAULIC CYLINDER, PARTICULARLY FOR HYDRAULIC MACHINES

(30) Priorité: 13.07.2012 FR 1256784
(43) Date de publication de la demande: 20.05.2015
(73) Titulaire: GE Renewable Technologies, 38100 Grenoble (FR)
(72) Inventeur: STEINHILBER, Armin, 38640 Claix (FR)
(74) Mandataire: Brannen, Joseph Waclaw
(86) Numéro de dépôt international: PCT/EP2013/064818
(87) Numéro de publication internationale: WO 2014/009543

(56) Documents cités:
- EP-A1- 1 167 778
- WO-A1-2005/121564
- WO-A1-2011/089361
- US-A- 3 596 560

## Description

La présente invention concerne un dispositif de commande pour le déplacement d'un vérin hydraulique, du type comprenant un corps formant une première chambre et une deuxième chambre adaptées pour recevoir un fluide d'actionnement, lesdites chambres étant séparées l'une de l'autre par un piston mobile dans le corps selon une première direction, dans laquelle le volume de la première chambre augmente pendant que le volume de la deuxième chambre diminue, et selon une deuxième direction, dans laquelle le volume de la deuxième chambre augmente pendant que le volume de la première chambre diminue, le dispositif de commande comprenant une vanne comprenant un corps présentant un volume interne relié à la première chambre du vérin par une première liaison hydraulique et à la deuxième chambre du vérin par une deuxième liaison hydraulique.

L'invention concerne également un système de commande du déplacement d'une vanne-fourreau de machine hydraulique comprenant un tel dispositif de commande, ainsi qu'une machine hydraulique comprenant un tel système de commande.

Une machine hydraulique, du type turbine, pompe ou turbine-pompe, comprend généralement une roue à aubes et une vanne-fourreau permettant de contrôler l'alimentation en eau de la roue à aubes. A cet effet, la vanne-fourreau est mobile entre une position d'ouverture, dans laquelle elle laisse passer l'eau d'une conduite alimentant la roue à aubes, et une position d'obturation, dans laquelle elle ferme la conduite. Le déplacement d'une telle vanne-fourreau est commandé, de façon connue, par une pluralité de vérins hydrauliques dont les tiges sont reliées à la vanne-fourreau et dont les déplacements sont commandés au moyen d'une vanne. Le déplacement des tiges dans les vérins entraîne donc celui de la vanne-fourreau dans la conduite alimentant la roue à aubes. Lorsque les pistons des vérins, et donc les tiges, se déplacent selon une première direction, les pistons soulèvent la vanne-fourreau vers sa position d'ouverture et lorsqu'ils se déplacent selon une deuxième direction, opposée à la première direction, la vanne-fourreau est abaissée vers sa position d'obturation.

On comprend aisément que pour les machines hydrauliques importantes, dont la vanne-fourreau est très lourde et encombrante, le déplacement vers la position d'obturation requière largement moins d'effort que le déplacement vers la position d'ouverture au cours duquel la vanne-fourreau est soulevée, du fait du poids de cette vanne-fourreau.

Par conséquent, il est nécessaire d'alimenter les vérins avec une pression plus importante lorsque les pistons sont déplacés selon la première direction que lorsqu'ils sont déplacés selon la deuxième direction.

Les dispositifs de commande connus, proposant de résoudre ce problème en permettant de basculer l'alimentation des vérins entre une première pression et une deuxième pression, sont complexes et nécessitent l'ajout de nombreux éléments en plus de la vanne de commande. Ces éléments nécessitent des réglages délicats et des interventions de maintenance fastidieuses.

L'un des buts de l'invention est de pallier ces inconvénients en proposant un dispositif de commande permettant de basculer de façon simple et fiable l'alimentation d'un vérin entre une première pression et une deuxième pression et ne nécessitant pas l'ajout d'éléments dans le dispositif de commande.

Les documents EP-1 167 778, WO-2005/121564 et US-3 596 560 décrivent un dispositif de commande selon le préambule de la revendication 1.

A cet effet, l'invention concerne un dispositif de commande selon la revendication 1.

Le passage d'une première pression d'alimentation à une deuxième pression d'alimentation du vérin se fait de façon simple en faisant passer le dispositif de distribution de sa première position à sa deuxième position permettant de relier respectivement la première chambre du vérin à la première source de fluide d'actionnement et la deuxième chambre du vérin à la deuxième source de fluide d'actionnement et en prévoyant que ces sources injectent le fluide d'actionnement à des pressions différentes. Le dispositif de commande est donc particulièrement simple et ne nécessite pas l'ajout d'éléments supplémentaires en dehors de la vanne. L'invention permet l'alimentation du vérin avec deux pressions différentes en modifiant simplement la structure de la vanne de commande du déplacement de ce vérin.

Selon d'autres caractéristiques du dispositif de commande selon l'invention :
- le dispositif comprend une première source de fluide d'actionnement, reliée à la première conduite hydraulique de la vanne et étant agencée pour injecter le fluide d'actionnement dans le volume interne défini par le corps de la vanne à une première pression, et une deuxième source de fluide d'actionnement, reliée à la deuxième conduite hydraulique et étant agencée pour injecter le fluide d'actionnement dans le volume interne défini par le corps de la vanne à une deuxième pression, la première pression étant supérieure à la deuxième pression ;
- la première pression est sensiblement comprise entre 60 bar et 250 bar et la deuxième pression est sensiblement comprise entre 10 bar et 70 bar ;
- le dispositif comprend en outre au moins un réservoir de fluide d'actionnement relié au volume interne de la vanne, le dispositif de distribution mettant la deuxième liaison hydraulique en communication fluidique avec ledit réservoir lorsqu'il est dans sa première position, de sorte à évacuer le fluide d'actionnement de la deuxième chambre du vérin lorsque le piston se déplace dans la première direction, et mettant la première liaison hydraulique en communication fluidique avec ledit réservoir lorsqu'il est dans sa deuxième position, de sorte à évacuer le fluide d'actionnement de la première chambre du vérin lorsque le piston se déplace dans la deuxième direction ;
- la vanne comprend un premier compartiment reliant la première liaison hydraulique à la première conduite hydraulique et un deuxième compartiment reliant la deuxième liaison hydraulique à la deuxième conduite hydraulique, le dispositif de distribution étant agencé pour libérer le premier compartiment et obturer le deuxième compartiment lorsqu'il est dans sa première position et pour libérer le deuxième compartiment et obturer le premier compartiment lorsqu'il est dans sa deuxième position ;
- la vanne comprend des moyens de commande du déplacement du dispositif de distribution entre sa première et sa deuxième positions, lesdits moyen comprenant des moyens de poussée du dispositif de distribution de sa première position vers sa deuxième position et des moyens de contraintes du dispositif de distribution tendant à le ramener vers sa première position ;

L'invention concerne également un système pour commander le déplacement d'une vanne-fourreau de machine hydraulique du type comportant une roue à aubes, la vanne-fourreau définissant un contour fermé et étant mobile entre une position d'ouverture et une position d'obturation d'au moins une canalisation d'alimentation en eau de la roue à aubes, le système comprenant au moins un vérin hydraulique, comprenant un corps formant une première chambre et une deuxième chambre adaptées pour recevoir un fluide d'actionnement, lesdites chambres étant séparées l'une de l'autre par un piston mobile dans le corps selon une première direction, dans laquelle le volume de la première chambre augmente pendant que le volume de la deuxième chambre diminue, et selon une deuxième direction, dans laquelle le volume de la deuxième chambre augmente pendant que le volume de la première chambre diminue, une tige étant liée audit piston et à la vanne-fourreau de sorte que le déplacement du piston dans sa première direction entraîne un déplacement de la vanne-fourreau vers sa position d'ouverture et un déplacement du piston dans sa deuxième direction entraîne un déplacement de la vanne-fourreau vers sa position d'obturation, le système comprenant un dispositif de commande tel que défini ci-dessus, la première liaison hydraulique dudit dispositif étant reliée à la première chambre dudit vérin et la deuxième liaison hydraulique dudit dispositif étant reliée à la deuxième chambre dudit vérin de sorte à commander le déplacement du piston dans la première direction et dans la deuxième direction par déplacement du dispositif de distribution entre sa première et sa deuxième positions.

Selon une autre caractéristique du système de commande selon l'invention, comprenant une pluralité de vérins hydrauliques, dont les tiges sont reliées à la vanne-fourreau en étant réparties le long du périmètre de ladite vanne-fourreau, le déplacement de chaque vérin hydraulique étant commandé par un dispositif de commande tel que défini ci-dessus.

L'invention concerne également une machine hydraulique de type turbine, pompe ou turbine-pompe, comportant une roue à aubes et une vanne-fourreau mobile entre une position d'ouverture et une position d'obturation d'au moins une canalisation d'alimentation en eau de la roue à aubes, la machine hydraulique comprenant un système de commande tel que décrit ci-dessus.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'une machine hydraulique conforme à l'invention,
- la Fig. 2 est une représentation schématique d'un système de commande selon l'invention, montrant le dispositif de commande dans la première position du dispositif de distribution,
- la Fig. 3 est une représentation schématique du système de commande de la Fig. 2, le dispositif de distribution étant dans sa deuxième position, et
- la Fig. 4 est une représentation schématique en coupe de la vanne du dispositif de commande.

Bien que la description soit faite en référence à un système de commande permettant de commander le déplacement d'une vanne-fourreau d'une machine hydraulique, on comprendra que le dispositif de commande de l'invention peut être adapté à d'autres types de systèmes de commande, dès lors qu'un vérin doit être alimenté alternativement avec deux pressions différentes en fonction du sens de déplacement du piston de ce vérin.

Dans la description, l'adjectif « hydraulique » peut se rapporter à un fluide d'actionnement des vérins, tel que de l'huile, ou à de l'eau s'écoulant dans la machine hydraulique.

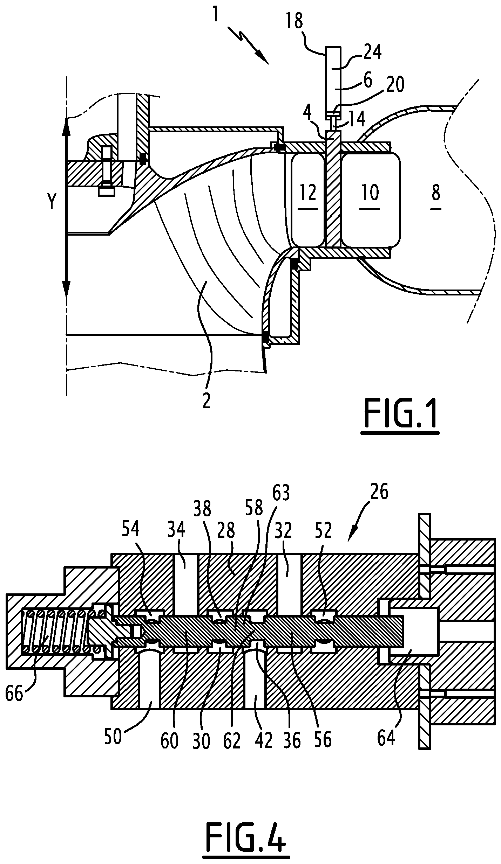

En référence à la Fig. 1, on décrit une machine hydraulique 1 comprenant une roue à aubes 2, une vanne-fourreau 4 et au moins un vérin hydraulique 6 appartenant un système de commande du déplacement de la vanne-fourreau 4. La vanne-fourreau 4 se déplace selon une direction principale Y, par exemple verticale, entre une position d'ouverture et une position d'obturation d'une canalisation 8 d'alimentation en eau de la roue à aubes 2. Sur la Fig. 1, la vanne-fourreau 4 est dans sa position d'obturation et ferme la canalisation 8. Dans sa position d'ouverture (non représentée), la vanne-fourreau 4 est soulevée selon la direction Y de sorte à libérer un passage entre la canalisation 8 et la roue à aubes 2. Dans le cas de la machine hydraulique 1, qui peut être de type turbine, pompe ou turbine-pompe, la canalisation 8 est formée par une coque dénommée « bâche ». La vanne-fourreau 4 est installée entre des avant-directrices 10 et des directrices 12 mobiles qui servent à diriger le flux d'eau vers la roue à aubes 2. De façon connue, la vanne-fourreau 4 présente un contour fermé, par exemple annulaire, et s'étend autour d'un axe sensiblement parallèle à la direction Y. Son déplacement peut être commandé par une pluralité de vérin hydraulique 6 répartis sur le périmètre de la vanne-fourreau 4. Chaque vérin 6 comprend une tige 14 liée à la vanne-fourreau 4 et s'étendant selon la direction Y de déplacement de la vanne-fourreau 4, de sorte que le déplacement de la tige 14 entraîne le déplacement de la vanne-fourreau 4.

Une telle machine hydraulique 1 et une telle vanne-fourreau 4 sont connues et ne seront pas décrite plus en détail ici. L'homme du métier pourra se référer au document WO-2011/089361 pour plus de détails sur la structure d'une telle vanne-fourreau et la commande de son déplacement entre la position d'ouverture et la position d'obturation au moyen des vérins 6, ainsi que sur la synchronisation du déplacement de ces vérins entre eux.

La suite de la description s'attachera plus particulièrement à décrire un dispositif de commande 16 du déplacement d'un des vérins 6 utilisés pour déplacer la vanne-fourreau 4.

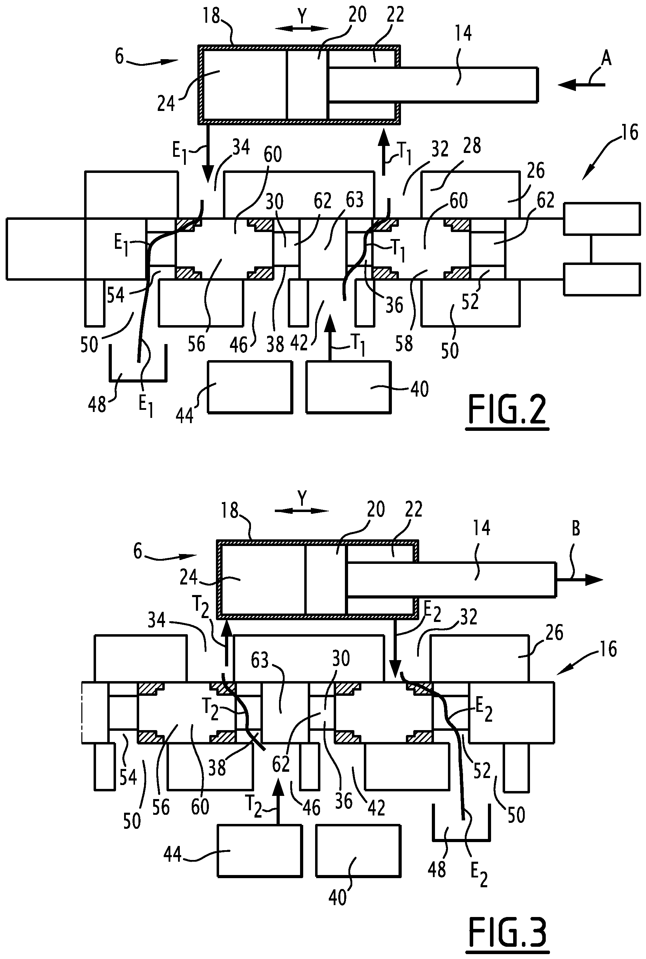

Un vérin 6 et le dispositif de commande 16 de son déplacement sont représentés de façon schématique sur les Fig. 2 et 3.

Le vérin hydraulique 6 est un vérin à double action hydraulique comprenant essentiellement un corps 18 présentant un volume interne à l'intérieur duquel un piston 20 est disposé de sorte à séparer le volume interne entre une première chambre 22 et une deuxième chambre 24. Le piston 20 est solidaire de la tige 14 qui s'étend dans la première chambre 22, tandis que la deuxième chambre 24 s'étend de l'autre côté du piston 20 par rapport à la tige 14. Le piston 20, et donc la tige 14, est mobile en translation dans le corps 18 selon une première direction, parallèle à la direction principale Y et représentée par la flèche A de la Fig. 1, dans laquelle le volume de la première chambre 22 augmente pendant que le volume de la deuxième chambre 24 diminue, et selon une deuxième direction, opposée à la première direction A et représentée par la flèche B de la Fig. 2, dans laquelle le volume de la deuxième chambre 24 augmente pendant que le volume de la première chambre 22 diminue. Lorsque le piston 20 se déplace dans la première direction A, la tige 14 tire la vanne-fourreau 4 de sorte à la soulever et à la déplacer vers sa position d'ouverture et lorsque le piston 20 se déplace dans la deuxième direction B, la tige 14 pousse la vanne-fourreau 4 de sorte à l'abaisser et à la déplacer vers sa position d'obturation.

De façon connue, le déplacement du piston 20 selon la première ou la deuxième directions se fait en injectant un fluide de commande, par exemple de l'huile, dans la première chambre 22 ou dans la deuxième chambre 24.

Cette injection est commandée par le dispositif de commande 16 qui va à présent être décrit.

Le dispositif de commande 16 comprend une vanne 26 pourvue d'un corps 28 définissant un volume interne 30.

La vanne 26 comprend une première liaison hydraulique 32 à la première chambre 22 du vérin 6 et une deuxième liaison hydraulique 34 à la deuxième chambre 24 du vérin 6. Par « liaison hydraulique », on entend une conduite, ou autre, mettant en communication fluidique le volume interne 30 de la vanne 26 à la première chambre 22 ou à la deuxième chambre 24 du piston. Ces liaisons hydrauliques ne sont pas représentées en détail sur les figures et peuvent avoir toute forme appropriée pour relier le vérin 6 à la vanne 26 en tenant compte de l'environnement formé par la machine hydraulique 1.

La première liaison hydraulique 32 débouche dans un premier compartiment 36 défini dans le volume interne 30 de la vanne 26 et la deuxième liaison hydraulique 34 débouche dans un deuxième compartiment 38 défini dans le volume interne 30 de la vanne 26.

Le premier compartiment 36 est également en communication fluidique avec une première source de fluide d'actionnement 40 par l'intermédiaire d'une première conduite hydraulique 42 et le deuxième compartiment 38 est en communication fluidique avec une deuxième source de fluide d'actionnement 44 par l'intermédiaire d'une deuxième conduite hydraulique 46.

La première source de fluide d'actionnement 40 est agencée pour injecter le fluide d'actionnement dans le premier compartiment 36 à une première pression. Cette première pression est par exemple sensiblement comprise entre 60 bar et 250 bar.

La deuxième source de fluide d'actionnement 44 est agencée pour injecter le fluide d'actionnement dans le deuxième compartiment 38 à une deuxième pression. Cette deuxième pression est par exemple sensiblement comprise entre 10 bar et 70 bar.

La première pression est donc largement supérieure à la deuxième pression ce qui permet d'adapter le mouvement du piston 20 aux efforts nécessaires pour déplacer la vanne-fourreau 4 comme cela sera décrit ultérieurement. Le fluide d'actionnement injecté par la première et la deuxième sources 40 et 44 est sensiblement identique et est par exemple de l'huile.

Le dispositif de commande 16 comprend en outre un réservoir de fluide d'actionnement 48 en communication, par l'intermédiaire de conduites hydrauliques 50, avec un troisième compartiment 52 et un quatrième compartiment 54 définis dans le volume interne 30 de la vanne 26, respectivement en communication fluidique avec la première liaison hydraulique 32 et la deuxième liaison hydraulique 34, de sorte à mettre en communication fluidique la première chambre 22 et la deuxième chambre 24 du vérin 6 avec le réservoir 48 de fluide d'actionnement. Selon un mode de réalisation, le dispositif de commande 16 comprend deux réservoirs 48, l'un étant prévu pour recevoir le fluide d'actionnement en provenance de la première chambre 22 et l'autre étant prévu pour recevoir le fluide d'actionnement en provenance de la deuxième chambre 24.

Le dispositif de commande 16 comprend en outre un dispositif de distribution 56 permettant d'ouvrir et de fermer les différentes communications fluidiques entre le vérin 6, la première source de fluide d'actionnement 40, la deuxième source de fluide d'actionnement 44 et le réservoir de fluide d'actionnement 48.

A cet effet, le dispositif de distribution 56 est formé par un corps 58 mobile dans le volume interne 30 de la vanne 26 et présentant des sections 60 de grand diamètre, dont le diamètre est sensiblement égal à celui du volume interne 30 de la vanne 26, de sorte à remplir le volume interne de la vanne 26 au droit de ces sections 60, et des sections 62 de diamètre réduit, dont le diamètre est sensiblement inférieur à celui du volume interne 30 de la vanne 26 afin de laisser une partie du volume interne de la vanne 26 libre au droit de ces sections 62, comme représenté sur la Fig. 4. Un tel dispositif de distribution 56 est par exemple formé par un tiroir de distribution.

Le corps 58 du dispositif de distribution est mobile entre une première position (Fig. 2) et une deuxième position (Fig. 3) permettant d'alimenter respectivement la première chambre 22 et la deuxième chambre 24 du vérin 6 en fluide d'actionnement.

Dans la première position, une section 62 de diamètre réduit du corps 58 du dispositif de distribution 56 se trouve dans le premier compartiment 36 et dans le trajet entre la première conduite hydraulique 42, reliant la première source de fluide d'actionnement 40 au volume interne 30 de la vanne, et la première liaison hydraulique 32 reliant la première chambre 22 du vérin 6 au volume interne 30 de la vanne. Ainsi, le fluide d'actionnement s'écoule de la première source 40 à la première chambre 22 du vérin 6 à la première pression, comme représenté par les références Ti de la Fig. 2. L'injection du fluide d'actionnement dans la première chambre 22 du vérin 6 tend à pousser le piston 20, et donc la tige 14, dans la première direction A, ce qui permet de soulever la vanne-fourreau 4.

Egalement dans la première position, une section 60 de grand diamètre du corps 58 du dispositif de distribution 56 se trouve dans le trajet entre la deuxième conduite hydraulique 46, reliant la deuxième source de fluide d'actionnement 44 au volume interne 30 de la vanne 26, et la deuxième liaison hydraulique 34 reliant la deuxième chambre 24 du vérin 6 au volume interne 30 de la vanne 26. Ainsi, la deuxième chambre 24 n'est pas alimentée en fluide d'actionnement. Au contraire, dans la première position, une section 62 de diamètre réduit se trouve dans le trajet entre la conduite hydraulique 50, reliant le réservoir 48 au quatrième compartiment 54, et la deuxième liaison hydraulique 34 de sorte que le fluide d'actionnement sort de la deuxième chambre 24 du vérin sous l'effet de la poussée du piston 20 dans la première direction A et rempli le réservoir 48, comme représenté par les références E₁ de la Fig. 2.

Dans la première position, une section 60 de diamètre important du corps 58 du dispositif de distribution se trouve dans le trajet entre la conduite hydraulique 50, reliant le réservoir 48 au troisième compartiment 52, et la première liaison hydraulique 32 de sorte à empêcher le fluide d'actionnement de s'écouler de la première chambre 22 du vérin 6 au réservoir 48.

Dans la deuxième position, une section 62 de diamètre réduit du corps 58 du dispositif de distribution 56 se trouve dans le deuxième compartiment 38 et dans le trajet entre la deuxième conduite hydraulique 46, reliant la deuxième source de fluide d'actionnement 44 au volume interne 30 de la vanne, et la deuxième liaison hydraulique 34 reliant la deuxième chambre 24 du vérin 6 au volume interne 30 de la vanne. Ainsi, le fluide d'actionnement s'écoule de la deuxième source 44 à la deuxième chambre 24 du vérin 6 à la deuxième pression, comme représenté par les références T₂ de la Fig. 3. L'injection du fluide d'actionnement dans la deuxième chambre 24 du vérin 6 tend à pousser le piston 20, et donc la tige 14, dans la deuxième direction B, ce qui permet d'abaisser la vanne-fourreau 4.

Egalement dans la deuxième position, une section 60 de grand diamètre du corps 58 du dispositif de distribution 56 se trouve dans le trajet entre la première conduite hydraulique 42, reliant la première source de fluide d'actionnement 40 au volume interne 30 de la vanne 26, et la première liaison hydraulique 32 reliant la première chambre 22 du vérin 6 au volume interne 30 de la vanne 26. Ainsi, la première chambre 22 n'est pas alimentée en fluide d'actionnement. Au contraire, dans la deuxième position, une section 62 de diamètre réduit se trouve dans le trajet entre la conduite hydraulique 50, reliant le réservoir 48 au troisième compartiment 52, et la première liaison hydraulique 32 de sorte que le fluide d'actionnement sort de la première chambre 22 du vérin sous l'effet de la poussée du piston 20 dans la deuxième direction B et rempli le réservoir 48, comme représenté par les références E₂ de la Fig. 3.

Dans la deuxième position, une section 60 de diamètre important du corps 58 du dispositif de distribution se trouve dans le trajet entre la conduite hydraulique 50, reliant le réservoir 48 au quatrième compartiment 54, et la deuxième liaison hydraulique 34 de sorte à empêcher le fluide d'actionnement de s'écouler de la deuxième chambre 22 du vérin 6 au réservoir 48.

Le corps 58 du dispositif de distribution comprend en outre une section centrale de grand diamètre 63 s'étendant entre le premier compartiment 36 et le deuxième compartiment 38 et agencé pour empêcher toute communication fluidique entre ces compartiments quelle que soit la position du dispositif de distribution 56. On empêche ainsi toute communication fluidique entre la première liaison hydraulique 32 et la deuxième conduite hydraulique 46 et entre la deuxième liaison hydraulique 34 et la première conduite hydraulique 42. On garantit ainsi l'impossibilité d'alimenter une des chambres du vérin 6 avec la mauvaise source de fluide de distribution quelle que soit la position du dispositif de distribution 56. La section centrale de grand diamètre 63 est disposée entre deux sections de diamètre réduit 62 permettant respectivement le passage du fluide d'actionnement entre la première conduite hydraulique 42 et la première liaison hydraulique 32 dans la première position du corps 58 et le passage du fluide d'actionnement entre la deuxième conduite hydraulique 46 et la deuxième liaison hydraulique 34 dans la deuxième position du corps 58.

Le déplacement du corps 58 du dispositif de distribution 56 en translation dans le volume interne 30 de la vanne 26 entre la première position et la deuxième position est piloté par des moyens de commande comprenant des moyens de poussée 64 du dispositif de distribution 56 de sa première position vers sa deuxième position et des moyens de contraintes 66 du dispositif de distribution 56 tendant à le ramener vers sa première position. Les moyens de poussée 64 sont par exemple formés par une chambre s'étendant dans le volume interne 30 de la vanne 26 et fermée par une extrémité du corps 58 du dispositif de distribution. La chambre est apte à être remplie par un fluide d'actionnement poussant le corps 58 du dispositif de distribution lorsqu'il remplit la chambre. Les moyens de contrainte 66 sont par exemple formés par un ressort appliqué contre l'autre extrémité du corps 58 de la vanne 26 et poussant le corps 58 vers sa première position lorsque les moyens de poussée 64 n'agissent plus sur le corps 58. Les moyens de commande comprennent en outre des moyens agencés pour déclencher le remplissage et la vidange de la chambre formant les moyens de poussée 64. Les moyens de commande peuvent en outre comprendre par exemple un capteur de position du corps 58 dans le volume interne 30 de la vanne 26. Les moyens de commande peuvent prendre d'autres formes que celle décrite ci-dessus, telles qu'un vérin ou autre.

Le dispositif de commande décrit ci-dessus permet donc d'alimenter la première chambre 22 du vérin 6 avec un fluide d'actionnement à haute pression, permettant ainsi de surmonter les efforts nécessaires pour soulever la vanne-fourreau vers sa position d'ouverture et la deuxième chambre 24 du vérin 6 avec un fluide d'actionnement à basse pression, suffisante pour permettre l'abaissement de la vanne-fourreau vers sa position d'obturation du fait de son poids. Ce dispositif de commande est particulièrement simple à mettre en oeuvre et permet de passer d'une alimentation à haute pression à une alimentation à basse pression très rapidement et sans nécessiter un pilotage complexe. Le dispositif de commande ne comprend notamment pas d'éléments supplémentaires en dehors de la vanne 26 par rapport à un dispositif de commande classique d'un vérin ne fonctionnant qu'avec une seule pression. En effet, par rapport à un dispositif de commande classique, seule la vanne est modifiée en prévoyant un dispositif de distribution tel que décrit ci-dessus.

Ce dispositif de distribution permet de piloter la mise en communication fluidique des chambres du vérin avec les première et deuxième sources de fluide d'actionnement et avec le ou les réservoirs de fluide d'actionnement au moyen d'une seule pièce mobile dans la vanne. On s'assure ainsi que la mise en communication entre les chambres du vérin et les sources de fluide d'actionnement reste toujours cohérente et que cette mise en communication ne dépend que de la position du dispositif de distribution. On garantit ainsi un bon fonctionnement du dispositif de commande puisqu'il n'est pas possible de mettre en communication une chambre avec la mauvaise source de fluide d'actionnement. En outre, il devient très facile d'identifier la source d'une éventuelle panne du fait du nombre réduit d'éléments.

## Revendications

1. Dispositif de commande (16) pour le déplacement d'un vérin hydraulique (6), comprenant un corps (18) formant une première chambre (22) et une deuxième chambre (24) adaptées pour recevoir un fluide d'actionnement, lesdites chambres (22, 24) étant séparées l'une de l'autre par un piston (20) mobile dans le corps (18) selon une première direction (A), dans laquelle le volume de la première chambre (22) augmente pendant que le volume de la deuxième chambre (24) diminue, et selon une deuxième direction (B), dans laquelle le volume de la deuxième chambre (24) augmente pendant que le volume de la première chambre (22) diminue, le dispositif de commande (16) comprenant une vanne (26) comprenant un volume interne (30) destiné à être relié à la première chambre (22) du vérin (6) par une première liaison hydraulique (32) et à la deuxième chambre (24) du vérin (6) par une deuxième liaison hydraulique (34), la vanne (26) comprenant en outre une première conduite hydraulique (42), destinée à être reliée à une première source de fluide d'actionnement (40), et une deuxième conduite hydraulique (46) destinée à être reliée à une deuxième source de fluide d'actionnement (44), lesdites conduites hydrauliques (42, 46) étant en communication avec le volume interne (30) de la vanne (26), ladite vanne (26) comprenant en outre un dispositif de distribution (56) mobile dans le volume interne (30) de la vanne (26) entre une première position, dans laquelle le dispositif de distribution (56) met en communication fluidique la première liaison hydraulique (32) et la première conduite hydraulique (42), et une deuxième position, dans laquelle le dispositif de distribution (56) met en communication fluidique la deuxième liaison hydraulique (34) et la deuxième conduite hydraulique (46), **caractérisé en ce que** le dispositif de distribution (56) empêche la communication fluidique entre la première liaison hydraulique (32) et la deuxième conduite hydraulique (46) et entre la deuxième liaison hydraulique (34) et la première conduite hydraulique (42) quelle que soit la position dudit dispositif de distribution (56).

2. Dispositif de commande selon la revendication 1, **caractérisé en ce qu'**il comprend une première source de fluide d'actionnement (40), reliée à la première conduite hydraulique (42) de la vanne et étant agencée pour injecter le fluide d'actionnement dans le volume interne (30) de la vanne à une première pression, et une deuxième source de fluide d'actionnement (44), reliée à la deuxième conduite hydraulique (46) et étant agencée pour injecter le fluide d'actionnement dans le volume interne (30) de la vanne à une deuxième pression, la première pression étant supérieure à la deuxième pression.

3. Dispositif de commande selon la revendication 2, **caractérisé en ce que** la première pression est sensiblement comprise entre 60 bar et 250 bar et **en ce que** la deuxième pression est sensiblement comprise entre 10 bar et 70 bar.

4. Dispositif de commande selon l'une quelconque des revendications 1 à 3, **caractérisé en ce qu'**il comprend en outre au moins un réservoir de fluide d'actionnement (48) relié au volume interne (30) de la vanne (26), le dispositif de distribution (56) mettant la deuxième liaison hydraulique (34) en communication fluidique avec ledit réservoir (48) lorsqu'il est dans sa première position, de sorte à évacuer le fluide d'actionnement de la deuxième chambre (24) du vérin (6) lorsque le piston (20) se déplace dans la première direction (A), et mettant la première liaison hydraulique (32) en communication fluidique avec ledit réservoir (48) lorsqu'il est dans sa deuxième position, de sorte à évacuer le fluide d'actionnement de la première chambre (22) du vérin (6) lorsque le piston (20) se déplace dans la deuxième direction (B).

5. Dispositif de commande selon l'une quelconque des revendications 1 à 4, **caractérisé en ce que** la vanne (26) comprend un premier compartiment (36) reliant la première liaison hydraulique (32) à la première conduite hydraulique (42) et un deuxième compartiment (38) reliant la deuxième liaison hydraulique (34) à la deuxième conduite hydraulique (46), le dispositif de distribution (56) étant agencé pour libérer le premier compartiment (36) et obturer le deuxième compartiment (38) lorsqu'il est dans sa première position et pour libérer le deuxième compartiment (38) et obturer le premier compartiment (36) lorsqu'il est dans sa deuxième position.

6. Dispositif de commande selon l'une quelconque des revendications 1 à 5, **caractérisé en ce que** la vanne (26) comprend des moyens de commande du déplacement du dispositif de distribution (56) entre sa première et sa deuxième positions, lesdits moyen comprenant des moyens de poussée (64) du dispositif de distribution (56) de sa première position vers sa deuxième position et des moyens de contraintes (66) du dispositif de distribution (56) tendant à le ramener vers sa première position.

7. Système pour commander le déplacement d'une vanne-fourreau (4) pour machine hydraulique (1) comportant la vanne-fourreau et une roue à aubes (2), la vanne-fourreau (4) définissant un contour fermé et étant mobile entre une position d'ouverture et une position d'obturation d'au moins une canalisation d'alimentation en eau (8) de la roue à aubes (2), le système comprenant au moins un vérin hydraulique (6), comprenant un corps (18) formant une première chambre (22) et une deuxième chambre (24) adaptées pour recevoir un fluide d'actionnement, lesdites chambres (22, 24) étant séparées l'une de l'autre par un piston (20) mobile dans le corps (18) selon une première direction (A), dans laquelle le volume de la première chambre (22) augmente pendant que le volume de la deuxième chambre (24) diminue, et selon une deuxième direction (B), dans laquelle le volume de la deuxième chambre (24) augmente pendant que le volume de la première chambre (22) diminue, une tige (14) étant liée audit piston (20) et à la vanne-fourreau (4) de sorte que le déplacement du piston (20) dans sa première direction (A) entraîne un déplacement de la vanne-fourreau (4) vers sa position d'ouverture et un déplacement du piston (20) dans sa deuxième direction (B) entraîne un déplacement de la vanne-fourreau (4) vers sa position d'obturation, ledit système étant **caractérisé en ce qu'**il comprend un dispositif de commande (16) selon l'une quelconque des revendications 1 à 6, la première liaison hydraulique (32) dudit dispositif (16) étant reliée à la première chambre (22) dudit vérin (6) et la deuxième liaison hydraulique (34) dudit dispositif (16) étant reliée à la deuxième chambre (24) dudit vérin (6) de sorte à commander le déplacement du piston (20) dans la première direction (A) et dans la deuxième direction (B) par déplacement du dispositif de distribution (56) entre sa première et sa deuxième positions.

8. Système de commande selon la revendication 7, **caractérisé en ce qu'**il comprend une pluralité de vérins hydrauliques (6), dont les tiges (14) sont reliées à la vanne-fourreau (4) en étant réparties le long du périmètre de ladite vanne-fourreau (4), le déplacement de chaque vérin hydraulique (6) étant commandé par un dispositif de commande (16) selon l'une quelconque des revendications 1 à 6.

9. Machine hydraulique (1) de type turbine, pompe ou turbine-pompe, comportant une roue à aubes (2) et une vanne-fourreau (4) mobile entre une position d'ouverture et une position d'obturation d'au moins une canalisation d'alimentation en eau (8) de la roue à aubes (2), la machine hydraulique étant **caractérisée en ce qu'**elle comporte en outre un système de commande selon la revendication 7 ou 8.

## Patentansprüche

1. Steuervorrichtung (16) zur Verschiebung eines Hydraulikzylinders (6), umfassend einen Körper (18), der eine erste Kammer (22) und eine zweite Kammer (24) bildet, die dazu vorgesehen sind, ein Betätigungsfluid aufzunehmen, wobei die Kammern (22, 24) voneinander durch einen Kolben (20) getrennt sind, der in dem Körper (18) in eine erste Richtung (A), in der das Volumen der ersten Kammer (22) zunimmt, während das Volumen der zweiten Kammer (24) abnimmt, und in eine zweite Richtung (B) beweglich ist, in der das Volumen der zweiten Kammer (24) zunimmt, während das Volumen der ersten Kammer (22) abnimmt, beweglich ist, wobei die Steuervorrichtung (16) ein Ventil (26) umfasst, umfassend ein Innenvolumen (30), das dazu bestimmt ist, mit der ersten Kammer (22) des Zylinders (6) durch eine erste Hydraulikverbindung (32) und mit der zweiten Kammer (24) des Zylinders (6) durch eine zweite Hydraulikverbindung (34) verbunden zu sein, wobei das Ventil (26) ferner eine erste Hydraulikleitung (42), die dazu bestimmt ist, mit einer ersten Betätigungsfluidquelle (40) verbunden zu sein, und eine zweite Hydraulikleitung (46) umfasst, die dazu bestimmt ist, mit einer zweiten Betätigungsfluidquelle (44) verbunden zu sein, wobei die Hydraulikleitungen (42, 46) mit dem Innenvolumen (30) des Ventils (26) in Verbindung stehen, wobei das Ventil (26) ferner eine Verteilungsvorrichtung (56) umfasst, die in dem Innenvolumen (30) des Ventils (26) zwischen einer ersten Position, in der die Verteilungsvorrichtung (56) die erste Hydraulikverbindung (32) und die erste Hydraulikleitung (42) in Fluidverbindung bringt, und einer zweiten Position beweglich ist, in der die Verteilungsvorrichtung (56) die zweite Hydraulikverbindung (34) und die zweite Hydraulikleitung (46) in Fluidverbindung bringt, **dadurch gekennzeichnet, dass** die Verteilungsvorrichtung (56) die Fluidverbindung zwischen der ersten Hydraulikverbindung (32) und der zweiten Hydraulikleitung (46) und zwischen der zweiten Hydraulikverbindung (34) und der ersten Hydraulikleitung (42) unabhängig von der Position der Verteilungsvorrichtung (56) verhindert.

2. Steuervorrichtung nach Anspruch 1, **dadurch gekennzeichnet, dass** sie eine erste Betätigungsfluidquelle (40), die mit der ersten Hydraulikleitung (42) des Ventils verbunden und dazu vorgesehen ist, das Betätigungsfluid in das Innenvolumen (30) des Ventils mit einem ersten Druck einzuleiten, und einer zweien Betätigungsfluidquelle (44) verbunden ist, die mit der zweiten Hydraulikleitung (46) verbunden und dazu vorgesehen ist, das Betätigungsfluid in das Innenvolumen (30) des Ventils mit einem zweiten Druck einzuleiten, wobei der erste Druck höher als der zweite Druck ist.

3. Steuervorrichtung nach Anspruch 2, **dadurch gekennzeichnet, dass** der erste Druck im Wesentlichen zwischen 60 bar und 250 bar beträgt, und dass der zweite Druck im Wesentlichen zwischen 10 bar und 70 bar beträgt.

4. Steuervorrichtung nach einem der Ansprüche 1 bis 3, **dadurch gekennzeichnet, dass** sie ferner mindestens einen Betätigungsfluidbehälter (48) umfasst, der mit dem Innenvolumen (30) des Ventils (26) verbunden ist, wobei die Verteilungsvorrichtung (56) die zweite Hydraulikverbindung (34) mit dem Behälter (48) in Fluidverbindung bringt, wenn sie sich in ihrer ersten Position befindet, um das Betätigungsfluid aus der zweiten Kammer (24) des Zylinders (6) zu beseitigen, wenn sich der Kolben (20) in die erste Richtung (A) verschiebt, und wobei sie die erste Hydraulikverbindung (32) mit dem Behälter (48) in Fluidverbindung bringt, wenn sie sich in ihrer zweiten Position befindet, um das Betätigungsfluid aus der ersten Kammer (22) des Zylinders (6) zu beseitigen, wenn sich der Kolben (20) in die zweite Richtung (B) verschiebt.

5. Steuervorrichtung nach einem der Ansprüche 1 bis 4, **dadurch gekennzeichnet, dass** das Ventil (26) ein erstes Abteil (36), das die erste Hydraulikverbindung (32) mit der ersten Hydraulikleitung (42) verbindet, und ein zweites Abteil (38) umfasst, das die zweite Hydraulikverbindung (34) mit der zweiten Hydraulikleitung (46) verbindet, wobei die Verteilungsvorrichtung (56) dazu vorgesehen ist, das erste Abteil (36) freizugeben und das zweite Abteil (38) zu verschließen, wenn sie sich in ihrer ersten Position befindet, und das zweite Abteil (38) freizugeben und das erste Abteil (36) zu verschließen, wenn sie sich in ihrer zweiten Position befindet.

6. Steuervorrichtung nach einem der Ansprüche 1 bis 5, **dadurch gekennzeichnet, dass** das Ventil (26) Mittel zur Steuerung der Verschiebung der Verteilungsvorrichtung (56) zwischen ihrer ersten und ihrer zweiten Position umfasst, wobei die Mittel Mittel zum Schieben (64) der Verteilungsvorrichtung (56) von ihrer ersten Position in ihre zweite Position und Mittel zum Einspannen (66) der Verteilungsvorrichtung (56) umfasst, die dazu neigen, sie in ihre erste Position zurückzuführen.

7. System zur Steuerung der Verschiebung eines Zylinderventils (4) für eine Hydraulikmaschine (1), umfassend das Zylinderventil und ein Laufrad (2), wobei das Zylinderventil (4) eine geschlossene Kontur definiert und zwischen einer Öffnungsposition und einer Verschlussposition mindestens eines Wasserversorgungskanals (8) des Laufrads (2) beweglich ist, wobei das System mindestens einen Hydraulikzylinder (6) umfasst, umfassend einen Körper (18), der eine erste Kammer (22) und eine zweite Kammer (24) bildet, die dazu vorgesehen sind, ein Betätigungsfluid aufzunehmen, wobei die Kammern (22, 24) voneinander durch einen Kolben (20) getrennt sind, der in dem Körper (18) in eine erste Richtung (A), in der das Volumen der ersten Kammer (22) zunimmt, während das Volumen der zweiten Kammer (24) abnimmt, und in eine zweite Richtung (B) beweglich ist, in der das Volumen der zweiten Kammer (24) zunimmt, während das Volumen der ersten Kammer (22) abnimmt, beweglich ist, wobei eine Stange (14) mit dem Kolben (20) und dem Zylinderventil (4) verbunden ist, so dass die Verschiebung des Kolbens (20) in seine erste Richtung (A) zu einer Verschiebung des Zylinderventils (4) in seine Öffnungsposition und eine Verschiebung des Kolbens (20) in seine zweite Richtung (B) zu einer Verschiebung des Zylinderventils (4) in seine Verschlussposition führt, wobei das System **dadurch gekennzeichnet ist, dass** es eine Steuervorrichtung (16) nach einem der Ansprüche 1 bis 6 umfasst, wobei die erste Hydraulikverbindung (32) der Vorrichtung (16) mit der ersten Kammer (22) des Zylinders (6) verbunden ist, und die zweite Hydraulikverbindung (34) der Vorrichtung (16) mit der zweiten Kammer (24) des Zylinders (6) verbunden ist, um die Verschiebung des Kolbens (20) in die erste Richtung (A) und in die zweite Richtung (B) durch Verschiebung der Verteilungsvorrichtung (56) zwischen ihrer ersten und ihrer zweiten Position zu steuern.

8. Steuersystem nach Anspruch 7, **dadurch gekennzeichnet, dass** es eine Vielzahl von Hydraulikzylindern (6) umfasst, deren Stangen (14) mit dem Zylinderventil (4) verbunden sind, wobei sie entlang des Umfangs des Zylinderventils (4) verteilt sind, wobei die Verschiebung jedes Hydraulikzylinders (6) durch eine Steuervorrichtung (16) nach einem der Ansprüche 1 bis 6 gesteuert wird.

9. Hydraulikmaschine (1) vom Typ Turbine, Pumpe oder Turbinenpumpe, umfassend ein Laufrad (2) und ein Zylinderventil (4), das zwischen einer Öffnungsposition und einer Verschlussposition mindestens eines Wasserversorgungskanals (8) des Laufrads (2) beweglich ist, wobei die Hydraulikmaschine **dadurch gekennzeichnet ist, dass** sie ferner ein Steuersystem nach Anspruch 7 oder 8 umfasst.

## Claims

1. Control device (16) for the movement of a hydraulic cylinder (6), comprising a body (18) forming a first chamber (22) and a second chamber (24) adapted for receiving an actuating fluid, the said chambers (22, 24) being separated from each other by a piston (20) which is movable in the body (18) in a first direction (A), in which the volume of the first chamber (22) increases while the volume of the second chamber (24) decreases and in a second direction (B), in which the volume of the second chamber (24) increases while the volume of the first chamber (22) decreases, the control device (16) comprising a valve (26) comprising an internal volume (30) intended to be connected to the first chamber (22) of the cylinder (6) by a first hydraulic connection (32) and to the second chamber (24) of the cylinder (6) by a second hydraulic connection (34), the valve (26) also comprising a first hydraulic line (42), intended to be connected to a first actuating fluid source (40) and a second hydraulic line (46) intended to be connected to a second actuating fluid source (44), the said hydraulic lines (42, 46) being in communication with the internal volume (30) of the valve (26), the said valve (26) also comprising a distribution device (56) which is movable in the internal volume (30) of the valve (26) between a first position, in which the distribution device (56) places the first hydraulic connection (32) and the first hydraulic line (42) in fluid communication and a second position, in which the distribution device (56) places the second hydraulic connection (34) and the second hydraulic line (46) in fluid communication, **characterised in that** the distribution device (56) prevents fluid communication between the first hydraulic connection (32) and the second hydraulic line (46) and between the second hydraulic connection (34) and the first hydraulic line (42), irrespective of the position of the said distribution device (56).

2. Control device according to claim 1, **characterised in that** it comprises a first actuating fluid source (40), connected to the first hydraulic line (42) of the valve and being arranged for injecting the actuating fluid into the internal volume (30) of the valve at a first pressure and a second actuating fluid source (44), connected to the second hydraulic line (46) and being arranged for injecting the actuating fluid into the internal volume (30) of the valve at a second pressure, the first pressure being higher than the second pressure.

3. Control device according to claim 2, **characterised in that** the first pressure is substantially between 60 bars and 250 bars and **in that** the second pressure is substantially between 10 bars and 70 bars.

4. Control device according to any one of claims 1 to 3, **characterised in that** it also comprises at least one actuating fluid reservoir (48) connected to the internal volume (30) of the valve (26), the distribution device (56) placing the second hydraulic connection (34) in fluid communication with the said reservoir (48) when it is in its first position, so as to remove the actuating fluid from the second chamber (24) of the cylinder (6) when the piston (20) moves in the first direction (A) and placing the first hydraulic connection (32) in fluid communication with the said reservoir (48) when it is in its second position, so as to remove the actuating fluid from the first chamber (22) of the cylinder (6) when the piston (20) moves in the second direction (B).

5. Control device according to any one of claims 1 to 4, **characterised in that** the valve (26) comprises a first compartment (36) connecting the first hydraulic connection (32) to the first hydraulic line (42) and a second compartment (38) connecting the second hydraulic connection (34) to the second hydraulic line (46), the distribution device (56) being arranged for freeing the first compartment (36) and sealing the second compartment (38) when it is in its first position and for freeing the second compartment (38) and sealing the first compartment (36) when it is in its second position.

6. Control device according to any one of claims 1 to 5, **characterised in that** the valve (26) comprises means of controlling the movement of the distribution device (56) between its first and second positions, the said means comprising means (64) of thrusting the distribution device (56) from its first position to its second position and means (66) of restraining the distribution device (56), tending to return it to its first position.

7. System for controlling the movement of a ring gate (4) for a hydraulic machine (1) comprising the ring gate and a turbine vane wheel (2), the ring gate (4) defining a closed outline and being movable between a position open to and a position sealed against at least one water supply pipe (8) of the turbine vane wheel (2), the system comprising at least one hydraulic cylinder (6), comprising a body (18) forming a first chamber (22) and a second chamber (24), adapted for receiving an actuating fluid, the said chambers (22, 24) being separated from each other by a piston (20) which is movable in the body (18) in a first direction (A), in which the volume of the first chamber (22) increases while the volume of the second chamber (24) decreases and in a second direction (B), in which the volume of the second chamber (24) increases while the volume of the first chamber (22) decreases, a rod (14) being connected to the said piston (20) and to the ring gate (4) so that the movement of the piston (20) in its first direction (A) brings about movement of the ring gate (4) to its open position and a movement of the piston (20) in its second direction (B) brings about movement of the ring gate (4) to its sealed position, the said system being **characterised in that** it comprises a control device (16) according to any one of claims 1 to 6, the first hydraulic connection (32) of the said device (16) being connected to the first chamber (22) of the said cylinder (6) and the second hydraulic connection (34) of the said device (16) being connected to the second chamber (24) of the said cylinder (6) so as to control the movement of the piston (20) in the first direction (A) and in the second direction (B) by movement of the distribution device (56) between its first and second positions.

8. Control system according to claim 7, **characterised in that** it comprises a plurality of hydraulic cylinders (6), the rods (14) of which are connected to the ring gate (4), being distributed along the perimeter of the said ring gate (4), the movement of each hydraulic cylinder (6) being controlled by a control device (16) according to any one of claims 1 to 6.

9. Hydraulic machine (1) of the turbine, pump or pump turbine type, comprising a turbine vane wheel (2) and a ring gate (4) which is movable between a position open to and a position sealed against at least one water supply pipe (8) of the turbine vane wheel (2), the hydraulic machine being **characterised in that** it also comprises a control system according to claim 7 or 8.
